# EUROPEAN PATENT SPECIFICATION

(11) **EP 4 071 912 B1**
(45) Date of publication and mention of the grant of the patent: **20.11.2024**
(21) Application number: 20962775.1
(22) Date of filing: 25.11.2020
(51) Int. Cl.: H01M 50/164, H01M 50/342, H01M 50/375, H01M 50/103, H01M 50/249

(54) **BATTERY CELL AND MANUFACTURING METHOD AND SYSTEM THEREFOR, BATTERY, AND ELECTRICAL APPARATUS**
BATTERIEZELLE, HERSTELLUNGSVERFAHREN UND SYSTEM DAFÜR, BATTERIE UND ELEKTRISCHES GERÄT
ÉLÉMENT DE BATTERIE, ET PROCÉDÉ DE FABRICATION ET SYSTÈME ASSOCIÉS, BATTERIE ET APPAREIL ÉLECTRIQUE

(43) Date of publication of application: 12.10.2022
(60) Divisional application: 24201480.1
(73) Proprietor: Contemporary Amperex Technology (Hong Kong) Limited, Central, Central And Western District (HK)
(72) Inventor: GUO, Qiang, Ningde, Fujian 352100 (CN); LI, Zhenhua, Ningde, Fujian 352100 (CN); WU, Xinzhan, Ningde, Fujian 352100 (CN); XU, Jiawei, Ningde, Fujian 352100 (CN); XIE, Qingsong, Ningde, Fujian 352100 (CN); JIN, Haizu, Ningde, Fujian 352100 (CN)
(74) Representative: Rowlands, Stuart Michael
(86) International application number: PCT/CN2020/131576
(87) International publication number: WO 2022/109884

(56) References cited:
- EP-A1- 2 388 846
- EP-A1- 2 629 351
- CN-A- 102 623 657
- CN-A- 104 319 360
- CN-A- 110 707 262
- CN-A- 111 668 399
- CN-U- 203 415 658
- KR-A- 20160 149 861
- US-A1- 2010 233 520

## Description

### TECHNICAL FIELD

The application relates to the technical field of batteries, and particularly relates to a battery cell and a manufacturing method and system therefor, a battery and an electric device.

### BACKGROUND ART

A rechargeable battery, also referred to as a secondary battery, is a battery that can be charged and reused by activating an active material after the battery is discharged. The rechargeable batteries are widely used in electronic devices, for example, mobile phones, laptops, battery cars, electric cars, electric planes, electric ships, electric toy cars, electric toy ships, electric toy planes, electric tools, etc.

In the development of battery technology, apart from improvement to the performance of the battery, the safety is also non-negligible because the battery cannot be used unless the safety is guaranteed. Thus, how to enhance the safety of the battery is a technical problem to be solved urgently in the battery technology.

EP2388846A1 relates to a secondary battery including a case configured to accommodate an electrode assembly, a safety vent on a first side of the case, and a film unit disposed on the first side of the case. The film unit includes a first film unit covering at least a part of the safety vent and including a break unit. The film unit further includes a second film unit extending from the first film unit and being adhered to the case.

EP2629351A1 relates to an electric storage device that includes an electrode assembly, a case, and a sealing member. The case includes a gas exhaust portion that opens to exhaust internal gas when an internal pressure increases. The sealing member is affixed to the case. The sealing member includes a protective portion and at least one of a perforation and a thin section having a thickness smaller than another section of the sealing member. The protective portion covers the gas exhaust portion of the case.

US2010/233520A1 relates to a lithium ion secondary battery includes a protective film fixed to a battery case while covering a safety valve part including a breakable portion. This protective film has a first fixed portion located around a valve-corresponding unfixed portion and fixed to the battery case and a second fixed portion located more outside than the first fixed portion and fixed to the battery case through an intermediate unfixed portion.

### SUMMARY OF THE INVENTION

The application provides a battery cell and a manufacturing method and system therefor, a battery and an electric device, which may enhance the safety of the battery.

In a first aspect, the embodiment of the application provides a battery cell. The battery cell includes: a battery box including a first wall and a pressure relief mechanism, where the pressure relief mechanism is arranged on the first wall, and the pressure relief mechanism is actuated to relieve internal pressure of the battery cell when the internal pressure or temperature of the battery cell reaches a threshold value; and a protective member positioned on an outer side of the first wall and including a body portion, a shielding portion and a weak portion, where the body portion is configured to be connected to the first wall, the shielding portion is configured to shield the pressure relief mechanism, the weak portion is configured to connect the body portion to the shielding portion, and the weak portion is configured to be broken when the pressure relief mechanism is actuated, so as to disconnect the body portion from the shielding portion.

In this embodiment of the application, the shielding portion of the protective member of the battery cell may block emissions released from other battery cells, so as to reduce possibility of melt-through of the pressure relief mechanism by the emissions released from other battery cells and reduce the safety risk. On the other hand, when thermal runaway occurs in the battery cell, the pressure relief mechanism is actuated to release a high-temperature and high-pressure substance from the battery cell, and meanwhile, the weak portion is broken under the action of the high-temperature and high-pressure substance, such that a channel for discharging the high-temperature and high-pressure substance is formed on the protective member, and the high-temperature and high-pressure substance is discharged in time, so as to reduce the safety risk.

In some embodiments, the battery cell further includes a bonding member, and the protective member is connected to the first wall by means of the bonding member.

In some embodiments, a surface, facing the first wall, of the body portion is provided with the bonding member, and a surface, facing the first wall, of the shielding portion and a surface, facing the first wall, of the weak portion are provided with no bonding member, so as to reduce the risk that the bonding member connects the shielding portion to the body portion when the weak portion is broken.

In some embodiments, a melting point of the protective member is greater than that of the pressure relief mechanism. The protective member with a higher melting point may bear higher temperature, so as to reduce the risk of melt-through by the emissions and improve safety performance.

In some embodiments, the melting point of the protective member is not less than 600 degrees Celsius.

In some embodiments, the protective member is made from materials that include at least one of mica, rubber and ceramic.

In some embodiments, a thickness of the shielding portion is less than that of the body portion.

In some embodiments, the pressure relief mechanism is provided with a first groove, the pressure relief mechanism is configured to be broken at the first groove to relieve the internal pressure of the battery cell when the internal pressure or temperature reaches the threshold value, and the shielding portion completely covers the first groove.

The shielding portion protrudes outward from the body portion in a direction perpendicular to the first wall. In this way, a distance between the shielding portion and the pressure relief mechanism may be increased in the direction perpendicular to the first wall, so as to prolong a heat transfer path between the shielding portion and the pressure relief mechanism and reduce heat transferred to the pressure relief mechanism.

An outer surface of the first wall is provided with a protrusion, and the shielding portion is positioned on one side, away from the pressure relief mechanism, of the protrusion in the direction perpendicular to the first wall.

The battery cell further includes a protective film arranged on a surface, facing the shielding portion, of the protrusion and covering the pressure relief mechanism. The protective film may block external dust, water vapor and other impurities to protect the pressure relief mechanism.

In some embodiments, the shielding portion compresses the protective film. The shielding portion and the protrusion clamp the protective film to reduce the risk of falling-off of the protective film.

A plurality of through open holes are provided between the body portion and the shielding portion, the weak portion includes a plurality of weak subareas, and the plurality of weak subareas and the plurality of open holes are alternately provided on the periphery of the shielding portion. The protective member is provided with the open hole, such that overall strength of the weak portion may be reduced, and when the shielding portion is impacted by the high-temperature and high-pressure substance, the weak subarea of the weak portion may be broken in time.

In some embodiments, a thickness of the weak subarea is less than or equal to that of the body portion; and/or the thickness of the weak subarea is less than or equal to that of the shielding portion.

In some embodiments, a second groove is provided in a surface of one side, away from the first wall, of the protective member, and the weak portion is a bottom wall of the second groove; and/or a second groove is provided in a surface of one side, close to the first wall, of the protective member, and the weak portion is a bottom wall of the second groove. By arranging the second groove, the strength of the weak portion may be reduced, and the weak portion may be timely broken when being impacted by the high-temperature and high-pressure substance.

In some embodiments, the second groove is an annular groove surrounding the shielding portion. Correspondingly, the weak portion is annular and is arranged around an edge of the shielding portion. When the shielding portion is impacted by the high-temperature and high-pressure substance, all parts of the weak portion may be broken, so as to increase a discharge rate of the high-temperature and high-pressure substance.

In some embodiments, a thickness of the weak portion is 0.08 mm to 0.3 mm.

In some embodiments, the battery box includes: a casing provided with an accommodation cavity and an opening; and an end cover assembly including a cover plate and an electrode terminal, where the cover plate covers the opening of the casing, the electrode terminal is arranged on the cover plate, and the first wall is the cover plate.

In some embodiments, the battery cell further includes an electrode assembly accommodated in the accommodation cavity.

In a second aspect, the embodiment of the application provides a battery including a box and at least one battery cell of the first aspect, the battery cell being received in the box.

In a third aspect, the embodiment of the application provides an electric device configured to receive electrical energy provided by the battery of the second aspect.

### BRIEF DESCRIPTION OF THE DRAWINGS

In order to describe the technical solutions in the embodiments of the application more clearly, the accompanying drawings required for describing the embodiments are briefly described below. Obviously, the accompanying drawings in the following description show merely some embodiments of the present disclosure, and a person of ordinary skill in the art would also be able to derive other accompanying drawings from these accompanying drawings without creative efforts.
Fig. 1 is a structural schematic diagram of a vehicle in one embodiment of the application;
Fig. 2 is a structural schematic diagram of a battery in one embodiment of the application;
Fig. 3 is a structural schematic diagram of a battery module in one embodiment of the application;
Fig. 4 is a structural schematic diagram of a battery cell in one embodiment of the application;
Fig. 5 is a schematic exploded view of the battery cell shown in Fig. 4;
Fig. 6 is a schematic sectional view of the battery cell shown in Fig. 4 along line A-A;
Fig. 7 is an enlarged view of the battery cell shown in Fig. 6 at box B;
Fig. 8 is an enlarged view of Fig. 7 at circle frame C;
Fig. 9 is a structural schematic diagram of a protective member in one embodiment of the application;
Fig. 10 is a structural schematic diagram of another protective member in one embodiment of the application;
Fig. 11 is an enlarged view of the protective member shown in Fig. 9 at circle frame D;
Fig. 12 is a schematic top view of a protective member in one embodiment of the application;
Fig. 13 is a schematic sectional view of the protective member shown in Fig. 12 along line E-E;
Fig. 14 is another schematic sectional view of the protective member shown in Fig. 12 along line E-E;
Fig. 15 is yet another schematic sectional view of the protective member shown in Fig. 12 along line E-E;
Fig. 16 is a schematic flowchart of a manufacturing method for a battery cell in one embodiment of the application; and
Fig. 17 is a structural schematic diagram of a manufacturing system for a battery cell in one embodiment of the application.

In the drawings, the components are not drawn to actual scale.

### SPECIFIC EMBODIMENTS

To make the objectives, technical solutions, and advantages of the embodiments of the application clearer, the following will clearly describe the technical solutions in the embodiments of the application with reference to the accompanying drawings in the embodiments of the application. Apparently, the described embodiments are some rather than all of the embodiments of the application.

Unless otherwise defined, all technical and scientific terms used in the application have the same meanings as those commonly understood by those who belong to the technical field of the present application. In the application, the terms used in the specification of the application are merely for the purpose of describing specific embodiments, and are not intended to limit the application. The terms "including" and "having" and any variations thereof in the specification and claims of the application and the above accompanying drawings are intended to cover non-exclusive inclusion. The terms "first", "second", etc. in the specification and claims of the application or the above accompanying drawings are used to distinguish different objects, but not to describe a specific order or primary and secondary relationship.

In the description of the application, it should be noted that, unless otherwise explicitly specified and defined, the terms "mounting", "connecting", "connection" and "attachment" should be understood in a broad sense, for example, they may be a fixed connection, a detachable connection, or an integrated connection; and may be a direct connection, or an indirect connection via an intermediate medium, or communication inside two elements. For those of ordinary skill in the art, the specific meanings of the above terms in the application could be understood according to specific circumstances.

As used herein, the term "and/or" is merely used to describe an associated relationship between associated objects and means three relationships, for example, A and/or B may mean A alone, A and B together, and B alone. In addition, the character "/" in the application generally indicates that the associated objects are an "or" relationship.

As used herein, "plurality" refers to two or more, and similarly, "plurality of sets" refers to two or more sets, and "plurality of pieces" refers to two or more pieces.

In the application, battery cells may include a lithium-ion secondary battery, a lithium-ion primary battery, a lithium-sulfur battery, a sodium lithium-ion battery, a sodium ion battery or a magnesium ion battery, etc., which is not limited by the embodiments of the application. The battery cell may be in cylindrical, flat, cuboid or other shapes, which is not limited by the embodiments of the application. Generally, the battery cells are divided into three types according to packaging manners: cylindrical battery cells, square battery cells and pouch battery cells, which is not limited by the embodiments of the application.

The battery mentioned in the embodiments of the application refers to a single physical module which includes one or a plurality of battery cells and therefore provides a higher voltage and capacity. For example, the battery mentioned in the application may include a battery module or a battery pack, etc. Generally, the battery includes a box for packaging one or a plurality of battery cells. The box may prevent liquid or other foreign matter from affecting charging or discharging of the battery cell.

The battery cell includes an electrode assembly and an electrolyte, where the electrode assembly is composed of a positive pole piece, a negative pole piece and a separator film. The battery cell works mainly depending on movement of metal ions between the positive pole piece and the negative pole piece. The positive pole piece includes a positive current collector and a positive active material layer, the positive active material layer coating a surface of the positive current collector, a current collector not coated with the positive active material layer protrudes out of the current collector coated with the positive active material layer, and the current collector not coated with the positive active material layer serves as a positive tab. With a lithium-ion battery as an example, a positive current collector may be made from aluminum, and the positive active material may be lithium cobalt oxide, lithium iron phosphate, ternary lithium or lithium manganate, etc. The negative pole piece includes a negative current collector and a negative active material layer, the negative active material layer coating a surface of the negative current collector, a current collector not coated with the negative active material layer protrudes out of the current collector coated with the negative active material layer, and the current collector not coated with the negative active material layer serves as a negative tab. The negative current collector may be made from copper, and the negative active material may be carbon, silicon, etc. In order to guarantee fusing does not occur during large current flow, a plurality of positive tabs are stacked together, and a plurality of negative tabs are stacked together. The separator film may be made from PP, PE, etc. In addition, the electrode assembly may be in a winding structure or a laminated structure, which is not limited in the embodiments of the application. For development of battery technology, various design factors should be considered simultaneously, such as energy density, cycle life, discharge capacity, charge-discharge rates and other performance parameters. In addition, safety of the battery needs to be further considered.

For a battery cell, the main safety hazard comes from charging and discharging processes, suitable ambient temperature design is also needed, and there are generally at least three protective measures for the battery cell for effectively avoiding unnecessary losses. Specifically, the protective measures at least include a switch element, selection of an appropriate separator film, and a pressure relief mechanism. The switch element is an element capable of stopping charging or discharging the battery when a temperature or resistance in the battery cell reaches a certain threshold value. The separator film is used for isolating the positive pole piece from the negative pole piece and may automatically dissolve micron-scale (even nano-scale) micropores attached to the separator film when the temperature rises to a certain value, such that metal ions may not pass through the separator film, and then reaction in the battery cell stops.

The pressure relief mechanism refers to an element or component that is actuated to relieve internal pressure or temperature of the battery cell when the internal pressure or temperature reaches a preset threshold value. The threshold value is designed differently according to different design requirements. The threshold value may depend on one or more materials of a positive pole piece, a negative pole piece, an electrolyte solution and a separator film in the battery cell. The pressure relief mechanism may be, for example, an explosion-proof valve, an air valve, a pressure relief valve, a safety valve, etc., and may specifically use a pressure-sensitive or temperature-sensitive element or structure. That is, when the internal pressure or temperature of the battery cell reaches a preset threshold value, the pressure relief mechanism executes action or a weak structure arranged in the pressure relief mechanism is broken, such that an opening or a channel through which internal pressure or temperature may be relieved is formed.

"Actuation" as referred to herein means that the pressure relief mechanism produces action or is activated to a state, so as to relieve the internal pressure and temperature of the battery cell. The action produced by the pressure relief mechanism may include, but is not limited to, at least a portion of the pressure relief mechanism breaking, crushing, being torn, or opened, etc. When the pressure relief mechanism is actuated, a high-temperature and high-pressure substance in the battery cell may be discharged outwards from an actuated portion as emissions. In this way, the pressure of the battery cell may be relieved under the condition that the pressure or the temperature is controllable, and therefore more-serious potential accidents are avoided.

The emissions from the battery cell in this application include, but are not limited to, the electrolyte solutions, the dissolved or split positive and negative pole pieces, fragments of the separator film, high-temperature and high-pressure gas produced by reactions, flames, etc.

The pressure relief mechanism on the battery cell has important influence on the safety of the battery. For example, when a short circuit, overcharge, etc. occur, thermal runaway inside the battery cell may result in a sudden rise in pressure or temperature. Under the condition, the internal pressure and temperature may be released outwards by means of actuation of the pressure relief mechanism, such that the battery cell is protected from explosion and fire.

In an existing pressure relief mechanism design scheme, high pressure and high heat in the battery cell are released mainly, that is, the emissions are discharged to an outside of the battery cell. However, in order to ensure output voltage or current of the battery, the plurality of battery cells are often required to be electrically connected by means of a bus component. The emissions discharged from the interior of the battery cell may cause a short circuit of other battery cells. For example, the emissions are diffused to other normal battery cells all around, and under the action of high temperature, the emissions easily melt through a pressure relief mechanism of a normal battery cell and enter an electrode assembly, resulting in a short circuit and thermal runaway of the original normal battery cell, and further aggravating the safety problem.

In view of this, the embodiment of the application provides a technical solution. A protective member is arranged on the pressure relief mechanism of the battery cell to protect the pressure relief mechanism, prevent melt-through of the pressure relief mechanism, reduce short circuit risk, and improve the safety of the battery.

The technical solutions described in the embodiments of the application are applicable to various devices using batteries, such as mobile phones, portable devices, notebook computers, electromobiles, electric toys, electric tools, electric vehicles, ships and spacecrafts, for example, the spacecrafts include airplanes, rockets, space shuttles, spaceships, etc.

It should be understood that the technical solutions described in the embodiments of the application are not only applicable to the devices described above, but also applicable to all devices using batteries. However, for simplicity of description, the following embodiments will be described by taking an electric vehicle as an example.

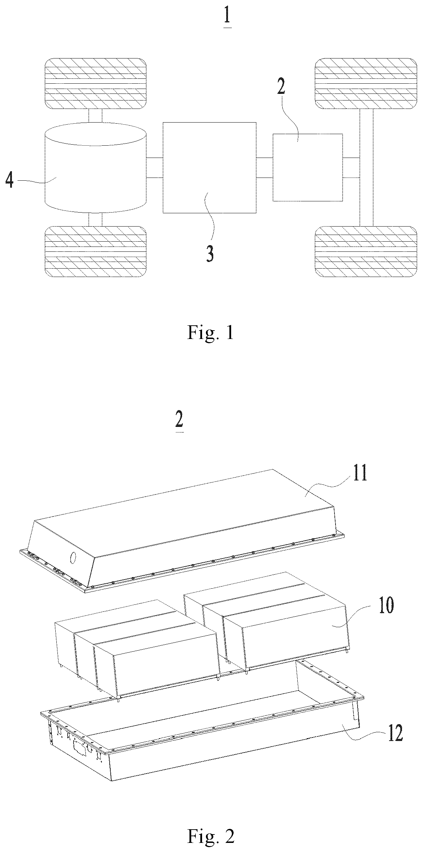

For example, Fig. 1 is a structural schematic diagram of a vehicle 1 in one embodiment of the application. The vehicle 1 may be a fuel, gas or new energy vehicle, and the new energy vehicle may be a pure electric vehicle, a hybrid vehicle, an extended range vehicle, etc. The vehicle 1 may be further internally provided with a battery 2, a controller 3 and a motor 4, where the controller 3 is used for controlling the battery 2 to energize the motor 4. For example, the battery 2 may be arranged at a bottom, head or tail of the vehicle 1. The battery 2 may be used for energizing the vehicle 1, for example, the battery 2 may be used as an operating power source for the vehicle 1, for circuitry of the vehicle 1, for example, for operating power requirements during start-up, navigation and operation of the vehicle 1. In another embodiment of the application, the battery 2 may not only be used as an operating power source for the vehicle 1, but serve as a driving power source for the vehicle 1, replacing or partially replacing fuel or natural gas to provide driving power for the vehicle 1.

For meeting different power use requirements, the battery may include a plurality of battery cells, wherein the plurality of battery cells may be connected in series, parallel or any combination, wherein a combination refers to a mixture of series connection and parallel connection. The battery may also refer to a battery pack. Optionally, the plurality of battery cells may be connected in series, in parallel or in a series-parallel mode to form a battery module, and then the plurality of battery modules may be connected in series, in parallel or in a series-parallel mode to form a battery. That is, the plurality of battery cells may form the battery directly, or may form the battery module first, and then the battery module forms the battery.

For example, Fig. 2 is a structural schematic diagram of a battery 2 in one embodiment of the application. The battery 2 may include a plurality of battery cells 10. The battery 2 may further include a box (or called a cover), the interior of the box is of a hollow structure, and the plurality of battery cells 10 are accommodated in the box. As shown in Fig. 2, the box may include two parts, referred to herein as a first part 11 and a second part 12 separately, which are buckled together. A shape of the first part 11 and the second part 12 may be determined according to a shape of combination of the plurality of battery cells 10, and each of the first part 11 and the second part 12 may have one opening. For example, each of the first part 11 and the second part 12 may be a hollow cuboid with only one open face, the opening of the first part 11 and the opening of the second part 12 are oppositely arranged, and the first part 11 and the second part 12 are buckled to each other to form a box with a closed cavity. The plurality of battery cells 10 are connected to each other in parallel or in series or in a series-parallel mode and then arranged in the box formed by buckling the first part 11 and the second part 12.

Optionally, the battery 2 may also include other structures, which are not repeated here. For example, the battery 2 may further include a bus component, and the plurality of battery cells 10 may be electrically connected to each other by means of the bus component, for example, in parallel or in series or in a series-parallel mode. Specifically, the bus component may connect electrode terminals of the battery cells 10 to achieve electrical connection between the battery cells 10. Further, the bus component may be welded to the electrode terminal of the battery cell 10. Electric energy of the plurality of battery cells 10 may be further led out through the box by means of an electric conduction mechanism. Optionally, the electric conduction mechanism may also belong to the bus component.

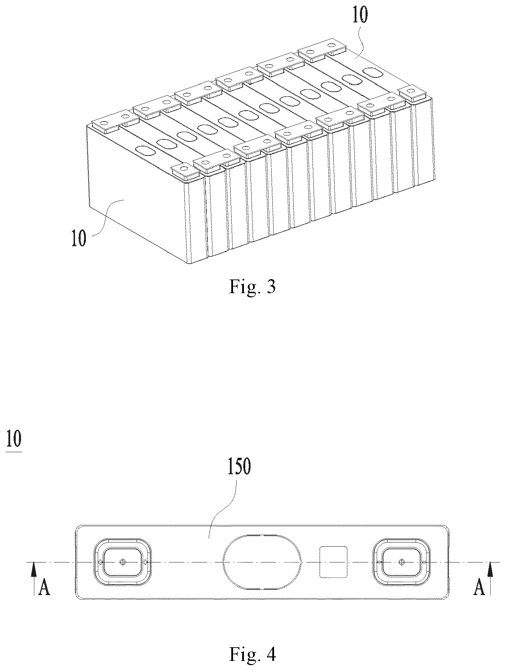

The number of battery cells 10 may be set to any number according to different power requirements. The plurality of battery cells 10 may be connected in series, in parallel, or in a series-parallel mode to achieve higher capacity or power. Since the number of battery cells 10 included in each battery 2 may be large, for ease of mounting, the battery cells 10 may be arranged in groups, each group of battery cells 10 constituting a battery module. The number of battery cells 10 included in the battery module is not limited and may be set as required. For example, Fig. 3 is an example of a battery module. The battery may include a plurality of battery modules, which may be connected in series, in parallel, or in a series-parallel mode.

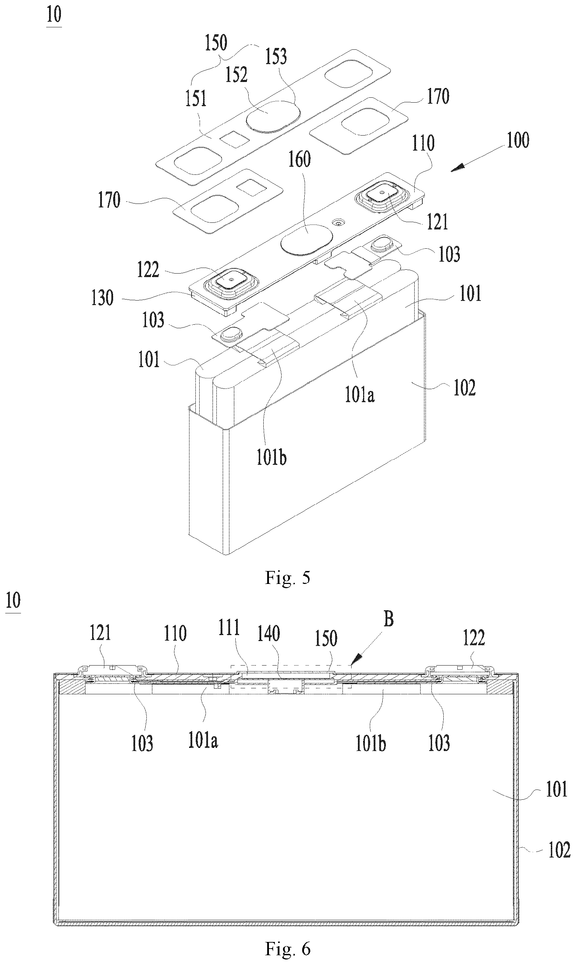

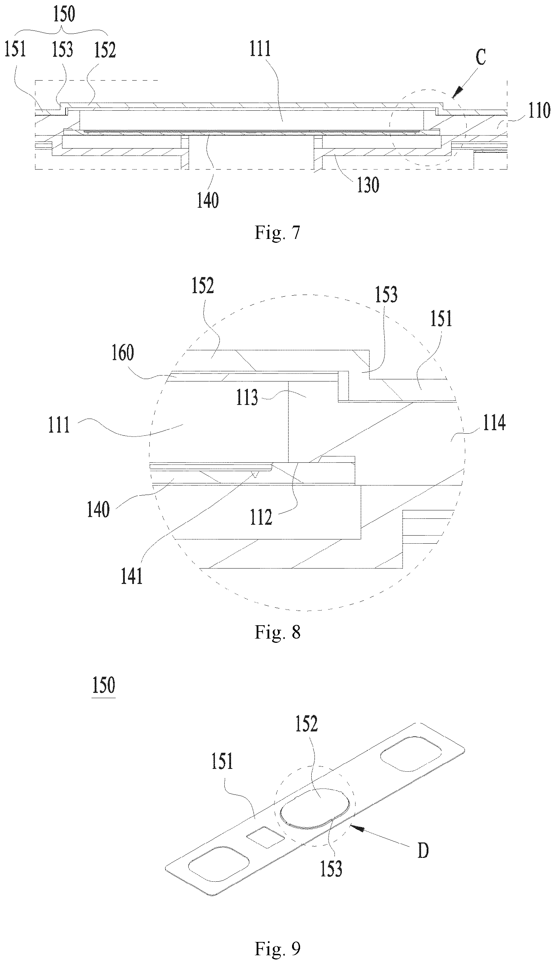

Fig. 4 is a structural schematic diagram of a battery cell 10 in one embodiment of the application; Fig. 5 is a schematic exploded view of the battery cell 10 shown in Fig. 4; and Fig. 6 is a schematic sectional view of the battery cell 10 shown in Fig. 4 along line A-A. Fig. 7 is an enlarged view of the battery cell 10 shown in Fig. 6 at box B.

As shown in Figs. 4 to 7, the battery cell 10 includes an electrode assembly 101 and a battery box for accommodating the electrode assembly 101, the battery box including an end cover assembly 100 and a casing 102. The casing 102 is provided with an accommodation cavity and an opening, and the electrode assembly 101 is accommodated in the accommodation cavity. For example, when the casing 102 is a hollow cuboid or cube, one of planes of the casing 102 is an open surface, that is, the plane is provided with no wall, so as to communicate the interior to exterior of the casing 102. When the casing 102 may be a hollow cylinder, an end face of the casing 102 is an open surface, that is, the end face is provided with no wall, so as to communicate the interior to the exterior of the casing 102. The end cover assembly 100 includes a cover plate 110, the cover plate 110 covering the opening and being connected to the casing 102, thereby closing the opening of the casing 102 to place the electrode assembly 101 in the closed cavity. The casing 102 is filled with an electrolyte, for example, an electrolyte solution.

The end cover assembly 100 may also include two electrode terminals, which may be arranged on the cover plate 110. The cover plate 110 is generally of a flat-plate shape, two electrode terminals are fixed to a flat-plate surface of the cover plate 110, the two electrode terminals are a positive electrode terminal 121 and a negative electrode terminal 122. Each electrode terminal is correspondingly provided with a connection member 103, which may also be referred to as a current collecting member, located between the cover plate 110 and the electrode assembly 101 for electrically connecting the electrode assembly 101 and the electrode terminal.

Each electrode assembly 101 is provided with a first tab 101a and a second tab 101b. Polarities of the first tab 101a and the second tab 101b are opposite. For example, when the first tab 101a is a positive tab, the second tab 101b is a negative tab. The first tab 101a of one or more electrode assemblies 101 is connected to one electrode terminal by means of one connection member 103, and the second tab 101b of the one or more electrode assemblies 101 is connected to the other electrode terminal by means of the other connection member 103. For example, the positive electrode terminal 121 is connected to the positive tab by means of one connection member 103, and the negative electrode terminal 122 is connected to the negative tab by means of the other connection member 103.

In the battery cell 10, one or more electrode assemblies 101 may be provided according to actual use requirements. In some examples, two separate electrode assemblies 101 are provided in the battery cell 10.

In some embodiments, the end cover assembly 100 may further include a lower insulator 130, where the lower insulator 130 is arranged on one side, facing the electrode assembly 101, of the cover plate 110, and the lower insulator 130 may separate the cover plate 110 from the connection member 103 and separate the cover plate 110 from the electrode assembly 101, so as to reduce risk of short circuits.

The battery box includes a first wall and a pressure relief mechanism 140 arranged on the first wall. In some examples, the first wall may be one wall of the casing 102, for example, the casing 102 includes four side walls and a bottom wall connected to the four side walls, and the first wall may be either the bottom wall or one side wall. In other examples, the first wall is the cover plate 110. The pressure relief mechanism 140 may be part of the first wall or may be separate from the first wall, for example, welded to the first wall.

The cover plate 110 of the embodiment of the application is provided with a through hole 111, and the through hole 111 penetrates the cover plate 110 in a thickness direction of the cover plate 110. The pressure relief mechanism 140 is connected to the cover plate 110 and covers the through hole 111. In the battery cell 10, the pressure relief mechanism 140 may seal the through hole 111 to separate the spaces of an inner side and an outer side of the cover plate 110, such that the electrolyte solution is prevented from flowing out of the through hole 111, so as to improve sealing performance of the battery cell 10.

The pressure relief mechanism 140 is configured to be actuated to relieve internal pressure of the battery cell 10 when the internal pressure or temperature reaches a preset threshold value. When internal pressure of the casing 102 rises and reaches a threshold value due to too much gas generated by the battery cell 10 or the internal temperature of the battery cell 10 rises and reaches a threshold value due to heat generated by internal reaction of the battery cell 10, the pressure relief mechanism 140 executes action or a weak structure arranged in the pressure relief mechanism 140 is broken, and then gas pressure and temperature are released outwards by means of an opening cracked in the pressure relief mechanism 140 and the through hole 111, so as to prevent the battery cell 10 from exploding.

The pressure relief mechanism 140 may be of a variety of possible pressure relief structures, which is not limited by the embodiments of the application. For example, the pressure relief mechanism 140 may be a temperature-sensitive pressure relief mechanism configured to melt when the internal temperature of the battery cell 10 provided with the pressure relief mechanism 140 reaches the threshold value; and/or, the pressure relief mechanism 140 may be a pressure-sensitive pressure relief mechanism configured to be broken when the internal gas pressure of the battery cell 10 provided with the pressure relief mechanism 140 reaches the threshold value.

The battery cell of the embodiment of the application further includes a protective member 150. The protective member 150 is arranged on the outer side of the cover plate 110, that is, the protective member 150 is arranged on one side, away from the electrode assembly 101, of the cover plate 110. The protective member 150 is configured to shield the pressure relief mechanism 140 and the through hole 111 from the outside. The protective member 150 may completely shield the through hole 111 or shield only part of the through hole 111.

In the battery, when the pressure relief mechanism of a certain battery cell is actuated and releases the emissions, the emissions are diffused to other normal battery cells all around, the protective member 150 on the normal battery cell may block the emissions, accordingly, the risk that the emissions make contact with the pressure relief mechanism 140 and melt through the pressure relief mechanism 140 is reduced, and the emissions are reduced or prevented from entering the electrode assembly 101, so as to reduce the safety risk.

The inventors have further discovered that although the protective member 150 of the battery cell 10 may shield the pressure relief mechanism 140 from the outside to reduce the risk of melt-through of the pressure relief mechanism 140 by the emissions released from other battery cells, the protective member 150 is difficult to open quickly when the battery cell 10 needs to release the high-temperature and high-pressure substance therein due to thermal runaway, accordingly, the high-temperature and high-pressure substance may not be discharged in time, causing the safety risk.

In view of this, the protective member 150 provided in an embodiment of the application includes a body portion 151, a shielding portion 152, and a weak portion 153. The body portion 151 is configured to be connected to the cover plate 110 to fix the protective member 150 to the cover plate 110. The shielding portion 152 is configured to shield the pressure relief mechanism 140 to block the emissions released from other battery cells, so as to reduce the risk of melt-through of the pressure relief mechanism 140 by the emissions released from the other battery cells. The weak portion 153 is configured to connect the body portion 151 to the shielding portion 152, and the weak portion 153 is configured to be broken when the pressure relief mechanism 140 is actuated, so as to disconnect the body portion 151 from the shielding portion 152.

The shielding portion 152 is configured to shield a portion, corresponding to the through hole 111, of the pressure relief mechanism 140. The shielding portion 152 may completely shield the through hole 111 or shield only part of the through hole 111. In the thickness direction of the cover plate 110, an orthogonal projection of the shielding portion 152 and an orthogonal projection of the through hole 111 at least partially overlap. The orthogonal projection of the through hole 111 refers to a region enclosed by the orthogonal projection of a hole wall of the through hole 111 in the thickness direction.

The weak portion 153 may be configured to be conveniently broken by the high-temperature and high-pressure substance, which is not limited in the embodiment of the application. The strength of the weak portion 153 is less than that of the shield portion 152 and that of the body portion 151, such that the weak portion 153 may be broken when the pressure relief mechanism 140 is actuated, so as to disconnect the body portion 151 from the shielding portion 152. The protective member 150 may reduce the strength of the weak portion 153 by providing a structure, for example, an opening, a groove, a score, etc. Certainly, the weak portion 153 may be made from a low-strength material.

When the pressure relief mechanism 140 is actuated, the weak portion 153 is broken under the action of the high-temperature and high-pressure substance, so as to disconnect the body portion 151 from the shielding portion 152. The high-temperature and high-pressure substance may act directly on the weak portion 153, or may transfer heat and pressure to the weak portion 153 by means of the shielding portion 152. In some examples, the weak portion 153 may be broken entirely, and the shielding portion 152 is not restrained by the body portion 151 and is flushed away by the high-temperature and high-pressure substance, such that the shielding portion 152 does not block the high-temperature and high-pressure substance any more, and a channel for discharging the high-temperature and high-pressure substance is formed in the protective member 150, so as to quickly discharge the high-temperature and high-pressure substance out of the battery cell 10. In other examples, the weak portion 153 may be broken partially, and the protective member 150 may form a channel at a broken position of the weak portion 153, and the high-temperature and high-pressure substance may be discharged by means of the channel. In addition, a connection force between the shielding portion 152 and the body portion 151 is reduced, and the shielding portion 152 is turned outwards under the impact of the high-temperature and high-pressure substance, such that a size of the channel is increased, and discharging efficiency of the high-temperature and high-pressure substance is increased.

On one hand, the shielding portion 152 of the protective member 150 of the battery cell 10 may block emissions released from other battery cells, so as to reduce the risk of melt-through of the pressure relief mechanism 140 by the emissions released from other battery cells. On the other hand, when thermal runaway occurs in the battery cell 10, the pressure relief mechanism 140 is actuated to release a high-temperature and high-pressure substance in the battery cell, and meanwhile, the weak portion 153 is broken under the action of the high-temperature and high-pressure substance, such that a channel for discharging the high-temperature and high-pressure substance is formed on the protective member 150, and the high-temperature and high-pressure substance is discharged in time, so as to reduce the safety risk.

In some embodiments of the application, a melting point of the protective member 150 is greater than that of the pressure relief mechanism 140. Compared with the pressure relief mechanism 140, the protective member 150 with a higher melting point may bear higher temperature, so as to reduce the risk of melt-through by the emissions and improve safety performance.

In one embodiment of the application, the melting point of the protective member 150 is not less than 600 degrees Celsius. In this way, the protective member 150 with the higher melting point is less likely to be melted through by the emissions. Optionally, the melting point of the protective member 150 is not less than 1000 degrees Celsius.

In some embodiments of the application, the protective member 150 is made from materials that include at least one of mica, rubber and ceramic. Optionally, the protective member 150 is mica paper or a mica plate, which has insulating, high temperature resistant properties, and may effectively block the high-temperature emissions to protect the pressure relief mechanism 140. The mica paper or the mica plate is thin and may be timely broken at the weak portion 153 when being impacted by the high-temperature and high-pressure substance; and moreover, the mica paper or the mica plate with a smaller thickness and lower weight has small influence on energy density of the battery cell.

In some embodiments of the application, the protective member 150 may also insulate heat. The protective member 150 may separate at least part of the emissions from the cover plate 110, thereby reducing the heat transferred to the cover plate 110, reducing a temperature rise of the battery cell 10, making the electrode assembly 101 operate in a suitable temperature range, and improving charge and discharge performance of the electrode assembly 101.

In some embodiments of the application, the shielding portion 152 completely covers the through hole 111 in the thickness direction of the cover plate 110, such that the shielding portion 152 may block the emissions as much as possible, so as to reduce the risk that the emissions enter the through hole 111.

The battery cell of the embodiment of the application further includes a bonding member 170, and the protective member 150 is connected to the cover plate 110 by means of the bonding member 170. The bonding member 170 may be gum. Before being fitted to the cover plate 110, the protective member 150 may be bonded to release paper by means of the bonding member 170; and when necessary, the protective member 150 and the bonding member 170 are striped from the release paper and then bonded to the cover plate 110.

In some embodiments, a surface, facing the cover plate 110, of the body portion 151 is provided with the bonding member 170. The bonding member 170 fixes the body portion 151 to the cover plate 110. The bonding member 170 has adhesiveness, becomes soft at a high temperature and is not easily broken, and under the condition that the bonding member 170 is also provided on the shielding portion 152 and the weak portion 153, when the weak portion 153 is broken, the bonding member 170 may connect the shielding portion 152 to the body portion 151, resulting in that the high-temperature and high-pressure substance may not be timely discharged, and thus, neither a surface, facing the cover plate 110, of the shielding portion 152 nor a surface, facing the cover plate 110, of the weak portion 153 is provided with the bonding member 170.

In some embodiments, one bonding member 170 may be provided. In other embodiments, a plurality of bonding members 170 may be arranged discontinuously.

Fig. 8 is an enlarged view of Fig. 7 at box C. As shown in Fig. 8, in some embodiments of the application, the pressure relief mechanism 140 is provided with a first groove 141, the pressure relief mechanism 140 is configured to be broken at the first groove 141 to relieve the internal pressure of the battery cell when the internal pressure or temperature reaches a threshold value. A bottom wall of the first groove 141 is of a weak structure formed on the pressure relief mechanism 140, when the internal pressure or temperature of the battery cell reaches the threshold value, the bottom wall of the first groove 141 is cracked to form an opening, and the gas pressure and temperature are released outwards by means of the opening cracked in the pressure relief mechanism 140 and the through hole 111, so as to prevent the battery cell from exploding.

The bottom wall of the first groove 141 is weaker and is more easily melted through by the emissions. Thus, in some embodiments, the shielding portion 152 completely covers the first groove 141, that is, the orthogonal projection of the shielding portion 152 completely covers the orthogonal projection of the first groove 141 in the thickness direction of the cover plate 110, so as to reduce the risk that the emissions fall into the first groove 141 of the pressure relief mechanism 140, further to reduce the possibility of melt-through of the pressure relief mechanism 140.

The shielding portion 152 protrudes outward from the body portion 151 in a direction perpendicular to the cover plate 110. In this way, a distance between the shielding portion 152 and the pressure relief mechanism 140 may be increased in the direction perpendicular to the cover plate 110 (that is, the thickness direction of the cover plate 110), so as to prolong a heat transfer path between the shielding portion 152 and the pressure relief mechanism 140 and reduce heat transferred to the pressure relief mechanism 140. Additionally, in some examples, when the internal pressure or temperature of the battery cell reaches the threshold value, the pressure relief mechanism 140 may be broken at the bottom wall of the first groove 141, and a portion, arranged along the broken position, of the pressure relief mechanism 140 folds upward to form an opening to release the high-temperature and high-pressure substance. If the distance between the shielding portion 152 and the pressure relief mechanism 140 is too small, the shielding portion 152 may block folding of the pressure relief mechanism 140, resulting in a small opening of the pressure relief mechanism 140, and the shielding portion 152 may not be flushed away by the high-temperature and high-pressure substance in time. Therefore, the shielding portion 152 protrudes out of the body portion 151, so as to increase the distance between the shielding portion 152 and the pressure relief mechanism 140, and accordingly, the shielding portion 152 is prevented from blocking folding of the pressure relief mechanism 140.

In some embodiments of the application, the weak portion 153 extends from an edge of the shielding portion 152 toward the cover plate 110 and is connected to the body portion 151. The protective member 150 is provided with a recessed portion on one side, facing the cover plate 110, of the shielding portion 152. Each of the body portion 151 and the shielding portion 152 is of a flat-plate shape and is substantially perpendicular to the thickness direction of the cover plate 110. The weak portion 153 is bent at a preset angle relative to the shielding portion 152. As shown in Fig. 8, the weak portion 153 is substantially perpendicular to the shielding portion 152. Certainly, an included angle between the weak portion 153 and the shielding portion 152 may be set according to product requirements, for example, may be 80 degrees to 160 degrees, and specifically, may be 90 degrees, 120 degrees, 150 degrees, etc., which is not limited herein.

In some embodiments of the application, the cover plate 110 is also provided with a reception groove 112 recessed from a surface, facing the electrode assembly 101, of the cover plate 110, and the reception groove 112 is arranged around the through hole 111. The pressure relief mechanism 140 is at least partially accommodated in the reception groove 112. The reception groove 112 may serve a positioning function to facilitate fitting of the pressure relief mechanism 140 and the cover plate 110.

In some embodiments of the application, the cover plate 110 includes a cover plate body 114 and a protrusion 113 connected to the cover plate body 114. The shielding portion 152 is positioned on one side, away from the pressure relief mechanism 140, of the protrusion 113 in the direction perpendicular to the cover plate 110. In some examples, the protrusion 113 is positioned between the shielding portion 152 and the cover plate body 114, and "between" refers to a spatial positional relationship of the protrusion 113, the shielding portion 152, and the cover plate body 114 in the thickness direction of the cover plate 110, and does not require the shielding portion 152 and the protrusion 113 to overlap in the thickness direction. The cover plate body 114 is of a flat-plate shape substantially. The protrusion 113 protrudes out relative to a surface, facing the protective member 150, of the cover plate body 114. The through hole 111 penetrate the cover plate body 114 and the protrusion 113. The through hole 111 includes an inner section penetrating the cover plate body 114 and an outer section penetrating the protrusion 113, and the protrusion 113 includes a sidewall surrounding the outer section. The protrusion 113 extends into the recessed portion of the protective member 150.

In some embodiments of the application, in a direction parallel to the cover plate body 114, the weak portion 153 is positioned on one side, away from the through hole 111, of the protrusion 113, and the protrusion 113 may separate the weak portion 153 from the through hole 111, and even if a portion of the weak portion 153 is melted through by the emissions, the protrusion 113 may block the emissions, so as to reduce or prevent the emissions from entering the through hole 111.

The protrusion 113 may also strengthen strength of the cover plate 110 at the through hole 111, and reduce deformation of the cover plate 110. In some examples, the reception groove 112 may be formed by pressing the cover plate 110, and after the cover plate 110 is pressed, the protrusion 113 is formed on the cover plate 110.

In some embodiments of the application, the battery cell 10 further includes a protective film 160 arranged between the shielding portion 152 and the pressure relief mechanism 140 and covering the through hole 111 and the pressure relief mechanism 140. In some examples, the protective film 160 is arranged on a surface, facing the shielding portion 152, of the protrusion 113 and covers the through hole 111 and the pressure relief mechanism 140. The protective film 160 may seal the through hole 111 to reduce impurities, for example, external dust and water vapor entering the through hole 111. The protective film 160 is of a film structure, has low strength, is easily broken under impact of the high-temperature and high-pressure substance, and does not influence discharge of the high-temperature and high-pressure substance. Optionally, the protective film 160 is a transparent polyethylene terephthalate (PET) patch.

In some embodiments of the application, the shielding portion 152 compresses the protective film 160. The shielding portion 152 and the protrusion 113 clamp the protective film 160, thereby reducing the risk of falling off of the protective film 160.

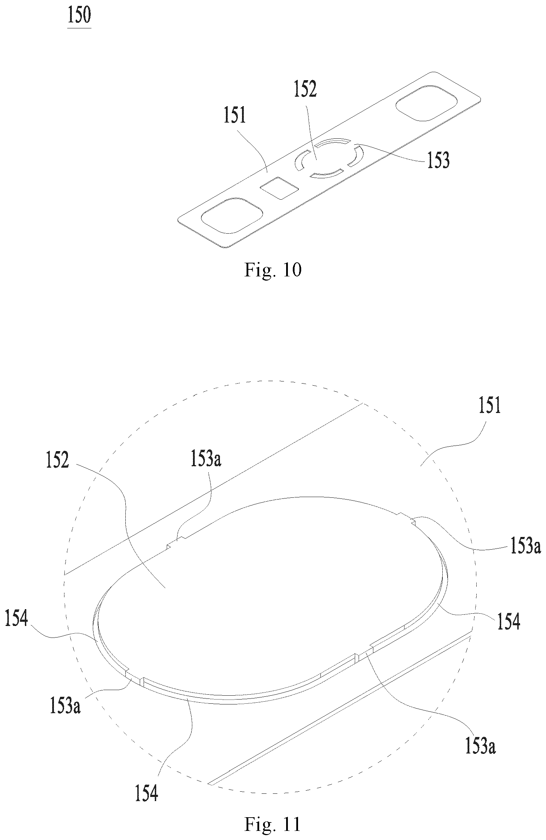

Fig. 9 is a schematic structural diagram of a protective member 150 in one embodiment of the application and illustrates a shape of the protective member 150 prior to fitting to the cover plate 110. Fig. 10 is a schematic structural diagram of another protective member 150 in one embodiment of the application and illustrates a shape of the protective member 150 prior to fitting to the cover plate 110.

With reference to Fig. 9, in some embodiments, the protective member 150 is directly provided with the shielding portion 152 protruding out of the body portion 151 during manufacturing of the protective member 150. The body portion 151 and the shielding portion 152 are each of a flat-plate shape substantially and are arranged parallel to each other, and the weak portion 153 is substantially perpendicular to the body portion 151 and the shielding portion 152. The protective member 150 forms a recessed portion inside the shielding portion 152. When the protective member 150 and the cover plate 110 are fitted, the body portion 151 is connected to the cover plate body 114, and the recessed portion of the protective member 150 reserves an accommodating space for the protrusion 113 of the cover plate 110.

With reference to Fig. 10, in other embodiments, the protective member 150 may be manufactured into a flat-plate shape in advance. In this way, the body portion 151, the shielding portion 152, and the weak portion 152 are substantially in one plane. A forming process of the flat-plate-shaped protective member 150 is simple. When the protective member 150 and the cover plate 110 are fitted, the shielding portion 152 is attached to the protrusion 113 or the protective film 160, and then the body portion 151 is pressed; and the strength of the weak portion 153 is smaller, and when the body portion 151 is pressed, the weak portion 153 may deform, thereby making the body portion 151 close to the cover plate 110, so as to connect the body portion 151 to the cover plate body 114. After the flat-plate-shaped protective member 150 is fitted to the cover plate 110, the protrusion 113 may support the shielding portion 152, such that the shielding portion 152 protrudes out of the body portion 151.

The weak portion 153 may be formed in different ways as desired, as long as the strength of the weakened portion 153 may be reduced and the weak portion 153 may be broken when the pressure relief mechanism 140 is actuated.

Fig. 11 is an enlarged view of the protective member 150 shown in Fig. 9 at circle frame D. As shown in Fig. 11, in some embodiments of the application, a plurality of through open holes 154 are provided between the body portion 151 and the shielding portion 152, the weak portion 153 includes a plurality of weak subareas 153a, and the plurality of weak subareas 153a and the plurality of open holes 154 are alternately provided on the periphery of the shielding portion 152. The protective member 150 is provided with the open hole 154, such that overall strength of the weak portion 153 may be reduced. When the shielding portion 152 is impacted by the high-temperature and high-pressure substance, the weak subarea 153a of the weak portion 153 may be broken in time. In some examples, when thermal runaway occurs in the battery cell 10, all of the weak subareas 153a are broken under the impact of the high-temperature and high-pressure substance, and the shielding portion 152 is not restrained by the body portion 151 any more and flushed away by the high-temperature and high-pressure substance. In other examples, it is possible that some of the weak subareas 153a are broken under impact of the high-temperature and high-pressure substance, and the other weak subareas 153a are still connected to the shielding portion 152 and the body portion 151. In such a condition, the binding force of the body portion 151 to the shielding portion 152 is small, and the shielding portion 152 may deform under the impact of the high-temperature and high-pressure substance and may also turn outwards with the undamaged weak subarea 153a as an axis, such that a channel may be formed between the body portion 151 and the shielding portion 152 for rapidly discharging the high-temperature and high-pressure substance. When thermal runaway occurs in the battery cell 10, the number of the broken weak subareas 153a depends on the capacity of the battery cell 10, whether all weak subareas 153a are broken or some weak subareas 153a are broken, as long as the temperature and pressure inside the battery cell 10 may be relieved to within a safe range within a certain time.

In some embodiments, four weak subareas 153a are provided, two weak subareas 153a are oppositely arranged in a length direction of the protective member 150, and the other two weak subareas 153a are oppositely arranged in a width direction of the protective member 150.

In some embodiments, in a circumferential direction of the shielding portion 152, a ratio of a size of a connection of the weak portion 153 with the shielding portion 152 to a circumference of the shielding portion 152 is less than 50%; and when the shielding portion 152 is impacted by the high-temperature and high-pressure substance, the connection of the weak portion 153 and the shielding portion 152 is more likely to be broken.

In some embodiments, the thickness of the weak subarea 153a is less than or equal to that of the body portion 151. When the thickness of the weak subarea 153a is less than that of the body portion 151, the strength of a connection of the weak subarea 153a and the body portion 151 is lower, and when the high-temperature and high-pressure substance impacts the protective member 150, the connection of the weak subarea 153a and the body portion 151 is more likely to be broken.

In some embodiments, the thickness of the weak subarea 153a is less than or equal to that of the shielding portion 152. When the thickness of the weak subarea 153a is less than that of the shielding portion 152, the strength of a connection of the weak subarea 153a and the shielding portion 152 is lower, and when the high-temperature and high-pressure substance impacts the protective member 150, the connection of the weak subarea 153a and the shielding portion 152 is more likely to be broken.

In some embodiments, the thickness of the weak subarea 153a is less than that of the body portion 151 and also less than that of the shielding portion 152.

In some examples, the thickness of the body portion 151 is equal to that of the shielding portion 152. In other examples, the thickness of the shielding portion 152 may also be less than that of the body portion 151.

In some embodiments, the thickness of the body portion 151, the shielding portion 152, and the weak subarea 153a is equal, such that the overall thickness of the protective member 150 is uniform, facilitating molding.

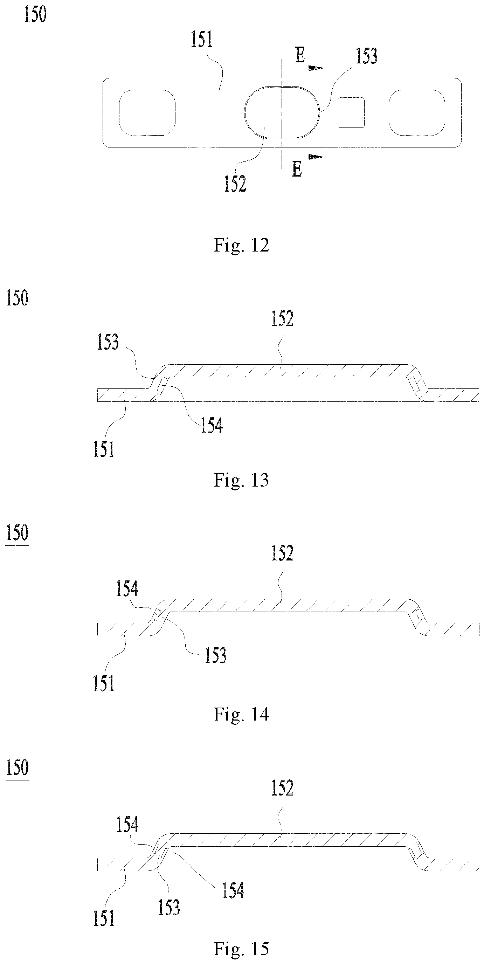

Fig. 12 is a structural schematic diagram of a protective member 150 in one embodiment of the application; Fig. 13 is a schematic sectional view of the protective member 150 shown in Fig. 12 along line E-E; and Fig. 14 is another schematic sectional view of the protective member 150 shown in Fig. 12 along line E-E. Fig. 15 is yet another schematic sectional view of the protective member 150 shown in Fig. 12 along line E-E.

In some embodiments, with reference to Figs. 12-15, the protective member 150 is provided with a second groove 154. A position of the second groove 154 may be set according to product requirements. In some examples, with reference to Fig. 13, the second groove 154 is arranged on an inside surface of the protective member 150 (that is, a surface of one side, close to the cover plate 110, of the protective member 150). In other examples, with reference to Fig. 14, the second groove 154 is arranged on an outside surface of the protective member 150 (that is, a surface of one side, away from the cover plate 110, of the protective member 150). In yet other examples, with reference to Fig. 15, the second groove 154 is arranged on both the surface of an inner side and the surface of an outer side of the protective member 150.

With reference to Figs. 12-15, the weak portion 153 is a bottom wall of the second groove 154. By arranging the second groove 154, the thickness of the weak portion 153 may be reduced, that is, the strength of the weak portion 153 may be reduced, and the weak portion 153 may be broken rapidly when being impacted by the high-temperature and high-pressure substance.

In some embodiments, the second groove 154 is an annular groove surrounding the shielding portion 152. Correspondingly, the weak portion 153 is annular and is arranged around an edge of the shielding portion 152. When the shielding portion 152 is impacted by the high-temperature and high-pressure substance, all parts of the weak portion 153 may be broken, so as to increase a discharge rate of the high-temperature and high-pressure substance.

In some examples, one annular second groove 154 is provided. Optionally, a plurality of annular second grooves 154 may be provided and are arranged at intervals from the body portion 151 to the shielding portion 152. The number of the second groove 154 may be set according to the capacity of the battery cell 10 as long as the temperature and pressure inside the battery cell 10 may be relieved to within the safe range within the certain time.

In some embodiments, the second grooves 154 are a plurality of strip-shaped grooves, and the plurality of second grooves 154 are arranged along the shielding portion 152 circumferentially at intervals.

The smaller the thickness of the weak portion 153 is, the lower the strength of the weak portion 153 is; and under the condition that the thickness of the weak portion 153 is too small, when the battery cell vibrates, the weak portion 153 is easily broken, resulting in failure of the protective member 150. Conversely, the larger the thickness of the weak portion 153 is, the higher the strength of the weak portion 153 is; and under the condition that the thickness of the weak portion 153 is too large, when the high-temperature and high-pressure substance impacts the shielding portion 152, the time required for the weak portion 153 to be broken is too long, influencing the discharge of the high-temperature and high-pressure substance. Thus, in some embodiments, a thickness of the weak portion 153 is 0.08 mm to 0.3 mm.

In some embodiments, a thickness of the body portion 151 may be equal to that of the shielding portion 152. In other embodiments, a thickness of the shielding portion 152 may also be less than that of the body portion 151.

As shown in Fig. 15, the protective member 150 includes an inner second groove 154 and an outer second groove 154, the inner second groove 154 and the outer second groove 154 at least partially overlapping in the thickness direction of the weak portion 153, so as to reduce a minimum thickness of the weak portion 153.

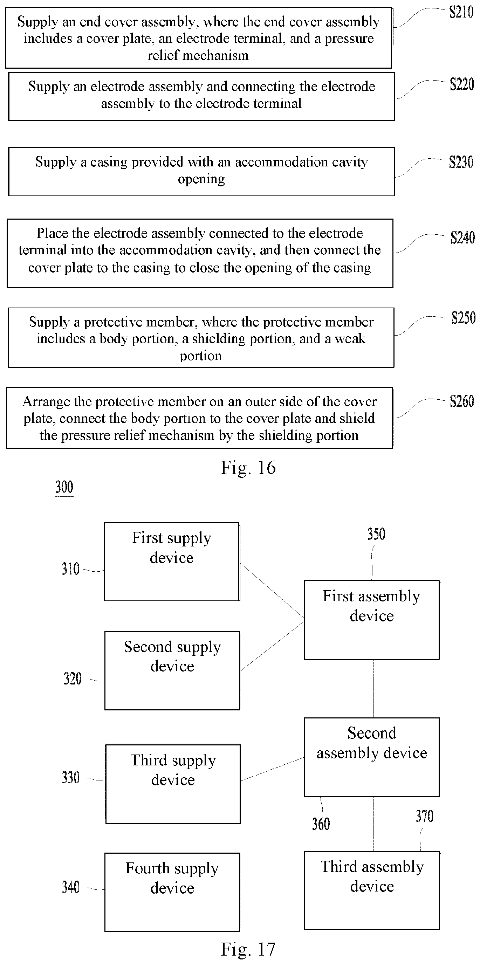

Fig. 16 shows a schematic flowchart of a manufacturing method for a battery cell in one embodiment of the application. As shown in Fig. 16, the manufacturing method may include:
S210: supply an end cover assembly 100, wherein the end cover assembly 100 includes a cover plate 110, an electrode terminal, and a pressure relief mechanism 140, the pressure relief mechanism 140 and the electrode terminal being arranged on the cover plate 110, and the pressure relief mechanism 140 being actuated to relieve internal pressure of the battery cell when the internal pressure or temperature reaches a threshold value;
S220: supply an electrode assembly 101 and connecting the electrode assembly 101 to the electrode terminal;
S230: supply a casing 102 provided with an accommodation cavity opening;
S240: place the electrode assembly 101 connected to the electrode terminal into the accommodation cavity, and then connect the cover plate 110 to the casing 102 to close the opening of the casing 102;
S250: supply a protective member 150, where the protective member 150 includes a body portion 151, a shielding portion 152, and a weak portion 153, the weak portion 153 being configured to connect the body portion 151 to the shielding portion 152, and the weak portion 153 being configured to be broken when the pressure relief mechanism 140 is actuated, so as to disconnect the body portion 151 from the shielding portion 152; and
S260: arrange the protective member 150 on an outer side of the cover plate 110, connect the body portion 151 to the cover plate 110 and shield the pressure relief mechanism 140 by the shielding portion 152.

The related structure of the battery cell manufactured by the manufacturing method of the embodiment may be referred to related contents described in the corresponding embodiments of Figs. 1-15, and is not repeated here.

Fig. 17 shows a structural schematic diagram of a manufacturing system for a battery cell in one embodiment of the application. As shown in Fig. 17, the manufacturing system 300 for a battery cell in the embodiment of the application may include a first supply device 310, a second supply device 320, a third supply device 330, a fourth supply device 340, a first assembly device 350, a second assembly device 360, and a third assembly device 370.

The first supply device 310 is used for supplying an end cover assembly 100, where the end cover assembly 100 includes a cover plate 110, an electrode terminal, and a pressure relief mechanism 140, the pressure relief mechanism 140 and the electrode terminal being arranged on the cover plate 110, and the pressure relief mechanism 140 being actuated to relieve internal pressure of the battery cell when the internal pressure or temperature reaches a threshold value.

The second supply device 320 is used for supplying an electrode assembly 101. The first assembly device 350 is used for connecting the electrode assembly 101 to the electrode terminal. The third supply device 330 is used for supplying a casing 102 provided with an accommodation cavity and an opening. The second assembly device 360 is used for placing the electrode assembly 101 connected to the electrode terminal into the accommodation cavity, and connecting the cover plate 110 to the casing 102 to close the opening of the casing 102. The fourth supply device 340 is used for supplying a protective member 150, where the protective member 150 includes a body portion 151, a shielding portion 152, and a weak portion 153, the weak portion 153 being configured to connect the body portion 151 to the shielding portion 152, and the weak portion 153 being configured to be broken when the pressure relief mechanism 140 is actuated, so as to disconnect the body portion 151 from the shielding portion 152. The third assembly device 370 is used for arranging the protective member 150 on an outer side of the cover plate 110, connecting the body portion 151 to the cover plate 110 and shielding the pressure relief mechanism 140 by the shielding portion 152.

The related structure of the battery cell manufactured by the manufacturing system of the embodiment may be referred to related contents described in the corresponding embodiments of Figs. 1-15, and is not repeated here.

## Claims

1. A battery cell (10), comprising:
a battery box comprising a first wall and a pressure relief mechanism (140), wherein the pressure relief mechanism (140) is arranged on the first wall, and the pressure relief mechanism (140) is configured to be actuated to relieve internal pressure of the battery cell (10) when the internal pressure or temperature of the battery cell (10) reaches a threshold value;
a protective member (150) positioned on an outer side of the first wall and comprising a body portion (151), a shielding portion (152) and a weak portion (153), wherein the body portion (151) is configured to be connected to the first wall, the shielding portion (152) protrudes outward from the body portion (151) in a direction perpendicular to the first wall and is configured to shield the pressure relief mechanism (140), the weak portion (153) is configured to connect the body portion (151) to the shielding portion (152), and the weak portion (153) is configured to be broken when the pressure relief mechanism (140) is actuated, so as to disconnect the body portion (151) from the shielding portion (152), wherein an outer surface of the first wall is provided with a protrusion (113), and the shielding portion (152) is positioned on one side, away from the pressure relief mechanism (140), of the protrusion (113) in the direction perpendicular to the first wall, and wherein a plurality of through open holes (154) are provided between the body portion (151) and the shielding portion (152), the weak portion (153) comprises a plurality of weak subareas (153a), and the plurality of weak subareas (153a) and the plurality of open holes (154) are alternately provided on a periphery of the shielding portion (152); and
a protective film (160) arranged on a surface, facing the shielding portion (152), of the protrusion (113) and covering the pressure relief mechanism (140).

2. The battery cell (10) according to claim 1, further comprising a bonding member (170), wherein the protective member (150) is connected to the first wall by means of the bonding member (170).

3. The battery cell (10) according to claim 2, wherein a surface, facing the first wall, of the body portion (151) is provided with the bonding member (170), and a surface, facing the first wall, of the shielding portion (152) and a surface, facing the first wall, of the weak portion (153) are provided with no bonding member (170).

4. The battery cell (10) according to any preceding claim, wherein a melting point of the protective member (150) is greater than that of the pressure relief mechanism (140).

5. The battery cell (10) according to claim 4, wherein the melting point of the protective member (150) is not less than 600 degrees Celsius.

6. The battery cell (10) according to any preceding claim, wherein the protective member (150) is made from materials that include at least one of mica, rubber and ceramic.

7. The battery cell (10) according to any preceding claim, wherein a thickness of the shielding portion (152) is less than that of the body portion (151).

8. The battery cell (10) according to any preceding claim, wherein the pressure relief mechanism (140) is provided with a first groove (141), the pressure relief mechanism (140) is configured to be broken at the first groove (141) to relieve the internal pressure of the battery cell (10) when the internal pressure or temperature reaches the threshold value, and the shielding portion (152) completely covers the first groove (141).

9. The battery cell (10) according to any preceding claim , wherein the shielding portion (152) compresses the protective film (160).

10. The battery cell (10) according to any preceding claim, wherein a thickness of each weak subarea (153a) is less than or equal to that of the body portion (151) and/or that of the shielding portion (152).

11. The battery cell (10) according to any one of claims 1-9, wherein:
a second groove is provided in a surface of one side of the protective member (150), away from the first wall and/or close to the first wall, and the weak portion (153) is a bottom wall of the second groove.

12. The battery cell (10) according to claim 11, wherein the second groove is an annular groove surrounding the shielding portion (152); and
a thickness of the weak portion (153) is preferably 0.08 mm to 0.3 mm.

13. The battery cell (10) according to any preceding claim, wherein the battery box comprises:
a casing (102) provided with an accommodation cavity and an opening, the accommodating cavity preferably housing an electrode assembly (101); and
an end cover assembly (100) comprising a cover plate (110) and an electrode terminal (121, 122), wherein the cover plate (110) is configured to cover the opening of the casing (102), the electrode terminal (121, 122) is arranged on the cover plate (110), and the first wall is the cover plate (110).

14. A battery, comprising a box and at least one battery cell in accordance with any one of claims 1-13, the battery cell being received in the box.

15. An electric device, comprising a battery according to claim 14 and configured to receive electrical energy provided by the battery.

## Patentansprüche

1. Batteriezelle (10), umfassend:
einen Batteriekasten, umfassend eine erste Wand und einen Druckentlastungsmechanismus (140), wobei der Druckentlastungsmechanismus (140) auf der ersten Wand angeordnet ist und der Druckentlastungsmechanismus (140) dazu konfiguriert ist, betätigt zu werden, um Innendruck der Batteriezelle (10) zu entlasten, wenn der Innendruck oder die Innentemperatur der Batteriezelle (10) einen Schwellenwert erreicht;
ein Schutzelement (150), das auf einer Außenseite der ersten Wand positioniert ist und einen Körperabschnitt (151), einen Abschirmabschnitt (152) und einen schwachen Abschnitt (153) umfasst, wobei der Körperabschnitt (151) dazu konfiguriert ist, mit der ersten Wand verbunden zu sein, der Abschirmabschnitt (152) von dem Körperabschnitt (151) in einer zu der ersten Wand senkrechten Richtung nach außen vorsteht und dazu konfiguriert ist, den Druckentlastungsmechanismus (140) abzuschirmen, wobei der schwache Abschnitt (153) dazu konfiguriert ist, den Körperabschnitt (151) mit dem Abschirmabschnitt (152) zu verbinden, und der schwache Abschnitt (153) dazu konfiguriert ist, gebrochen zu werden, wenn der Druckentlastungsmechanismus (140) betätigt wird, sodass der Körperabschnitt (151) von dem Abschirmabschnitt (152) getrennt wird, wobei eine Außenoberfläche der ersten Wand mit einem Vorsprung (113) versehen ist und der Abschirmabschnitt (152) in der zu der ersten Wand senkrechten Richtung auf einer von dem Druckentlastungsmechanismus (140) abgelegenen Seite des Vorsprungs (113) positioniert ist und wobei eine Vielzahl von offenen Durchgangslöchern (154) zwischen dem Körperabschnitt (151) und dem Abschirmabschnitt (152) bereitgestellt ist, wobei der schwache Abschnitt (153) eine Vielzahl von schwachen Teilbereichen (153a) umfasst und die Vielzahl von schwachen Teilbereichen (153a) und die Vielzahl von offenen Löchern (154) auf einem Umfang des Abschirmabschnitts (152) abwechselnd bereitgestellt sind; und
einen Schutzfilm (160), der auf einer dem Abschirmabschnitt (152) zugewandten Oberfläche des Vorsprungs (113) angeordnet ist und den Druckentlastungsmechanismus (140) abdeckt.

2. Batteriezelle (10) nach Anspruch 1, ferner umfassend ein Klebeelement (170), wobei das Schutzelement (150) mittels des Klebeelements (170) mit der ersten Wand verbunden ist.

3. Batteriezelle (10) nach Anspruch 2, wobei eine der ersten Wand zugewandte Oberfläche des Körperabschnitts (151) mit dem Klebeelement (170) versehen ist und eine der ersten Wand zugewandte Oberfläche des Abschirmabschnitts (152) und eine der erste Wand zugewandte Oberfläche des schwachen Abschnitts (153) mit keinem Klebeelement (170) versehen sind.

4. Batteriezelle (10) nach einem der vorangehenden Ansprüche, wobei ein Schmelzpunkt des Schutzelements (150) höher als derjenige des Druckentlastungsmechanismus (140) ist.

5. Batteriezelle (10) nach Anspruch 4, wobei der Schmelzpunkt des Schutzelements (150) nicht weniger als 600 Grad Celsius beträgt.

6. Batteriezelle (10) nach einem der vorangehenden Ansprüche, wobei das Schutzelement (150) aus Materialien hergestellt ist, die mindestens eines von Glimmer, Kautschuk und Keramik umfassen.

7. Batteriezelle (10) nach einem der vorangehenden Ansprüche, wobei eine Dicke des Abschirmabschnitts (152) geringer als diejenige des Körperabschnitts (151) ist.

8. Batteriezelle (10) nach einem der vorangehenden Ansprüche, wobei der Druckentlastungsmechanismus (140) mit einer ersten Nut (141) versehen ist, der Druckentlastungsmechanismus (140) dazu konfiguriert ist, an der ersten Nut (141) gebrochen zu werden, um den Innendruck der Batteriezelle (10) zu entlasten, wenn der Innendruck oder die Innentemperatur den Schwellenwert erreicht, und der Abschirmabschnitt (152) die erste Nut (141) vollständig abdeckt.

9. Batteriezelle (10) nach einem der vorangehenden Ansprüche, wobei der Abschirmabschnitt (152) den Schutzfilm (160) zusammendrückt.

10. Batteriezelle (10) nach einem der vorangehenden Ansprüche, wobei eine Dicke jedes schwachen Teilbereichs (153a) geringer als oder gleich derjenigen des Körperabschnitts (151) und/oder derjenigen des Abschirmabschnitts (152) ist.

11. Batteriezelle (10) nach einem der Ansprüche 1-9, wobei:
eine zweite Nut in einer Oberfläche einer von der ersten Wand abgelegenen und/oder nahe bei der ersten Wand gelegenen Seite des Schutzelements (150) bereitgestellt ist und der schwache Abschnitt (153) eine Bodenwand der zweiten Nut ist.

12. Batteriezelle (10) nach Anspruch 11, wobei die zweite Nut eine Ringnut ist, die den Abschirmabschnitt (152) umgibt; und
eine Dicke des schwachen Abschnitts (153) vorzugsweise 0,08 mm bis 0,3 mm beträgt.

13. Batteriezelle (10) nach einem der vorangehenden Ansprüche, wobei der Batteriekasten Folgendes umfasst:
ein Gehäuse (102), das mit einer Aufnahmehöhlung und einer Öffnung versehen ist, wobei die Aufnahmehöhlung vorzugsweise eine Elektrodenanordnung (101) unterbringt; und
eine Endabdeckungsanordnung (100), umfassend eine Abdeckplatte (110) und einen Elektrodenanschluss (121, 122), wobei die Abdeckplatte (110) dazu konfiguriert ist, die Öffnung des Gehäuses (102) abzudecken, der Elektrodenanschluss (121, 122) auf der Abdeckplatte (110) angeordnet ist und die erste Wand die Abdeckplatte (110) ist.

14. Batterie, umfassend einen Kasten und mindestens eine Batteriezelle nach einem der Ansprüche 1-13, wobei die Batteriezelle in dem Kasten aufgenommen ist.

15. Elektrische Vorrichtung, die eine Batterie nach Anspruch 14 umfasst und dazu konfiguriert ist, von der Batterie bereitgestellte elektrische Energie aufzunehmen.

## Revendications

1. Cellule de batterie (10), comprenant :
un coffre de batterie comprenant une première paroi et un mécanisme de décharge de pression (140), dans laquelle le mécanisme de décharge de pression (140) est agencé sur la première paroi, et le mécanisme de décharge de pression (140) est configuré pour être actionné pour décharger la pression interne de la cellule de batterie (10) quand la pression interne ou la température de la cellule de batterie (10) atteint une valeur seuil ;
un élément protecteur (150) positionné sur un côté externe de la première paroi et comprenant une partie de corps (151), une partie de blindage (152) et une partie faible (153), dans laquelle la partie de corps (151) est configurée pour être connectée à la première paroi, la partie de blindage (152) fait saillie vers l'extérieur depuis la partie de corps (151) dans une direction perpendiculaire à la première paroi et est configurée pour blinder le mécanisme de décharge de pression (140), la partie faible (153) est configurée pour connecter la partie de corps (151) à la partie de blindage (152), et la partie faible (153) est configurée pour être rompue quand le mécanisme de décharge de pression (140) est actionné, de manière à déconnecter la partie de corps (151) de la partie de blindage (152), dans laquelle une surface externe de la première paroi est dotée d'une saillie (113), et la partie de blindage (152) est positionnée sur un côté, à l'écart du mécanisme de décharge de pression (140), de la saillie (113) dans la direction perpendiculaire à la première paroi, et dans laquelle une pluralité de trous ouverts traversants (154) sont fournis entre la partie de corps (151) et la partie de blindage (152), la partie faible (153) comprend une pluralité de sous-zones faibles (153a), et la pluralité de sous-zones faibles (153a) et la pluralité de trous ouverts (154) sont fournies de manière alternée sur une périphérie de la partie de blindage (152) ; et
un film protecteur (160) agencé sur une surface, faisant face à la partie de blindage (152), de la saillie (113) et couvrant le mécanisme de décharge de pression (140).

2. Cellule de batterie (10) selon la revendication 1, comprenant en outre un élément de liaison (170), dans laquelle l'élément protecteur (150) est connecté à la première paroi au moyen de l'élément de liaison (170).

3. Cellule de batterie (10) selon la revendication 2, dans laquelle une surface, faisant face à la première paroi, de la partie de corps (151) est dotée de l'élément de liaison (170), et une surface, faisant face à la première paroi, de la partie de blindage (152) et une surface, faisant face à la première paroi, de la partie faible (153) ne sont dotées d'aucun élément de liaison (170).

4. Cellule de batterie (10) selon l'une quelconque des revendications précédentes, dans laquelle un point de fusion de l'élément protecteur (150) est plus élevé que celui du mécanisme de décharge de pression (140).

5. Cellule de batterie (10) selon la revendication 4, dans laquelle le point de fusion de l'élément protecteur (150) n'est pas moins de 600 degrés Celsius.

6. Cellule de batterie (10) selon l'une quelconque des revendications précédentes, dans laquelle l'élément protecteur (150) est fabriqué à partir de matériaux qui incluent au moins un matériau parmi le mica, le caoutchouc et la céramique.

7. Cellule de batterie (10) selon l'une quelconque des revendications précédentes, dans laquelle une épaisseur de la partie de blindage (152) est inférieure à celle de la partie de corps (151).

8. Cellule de batterie (10) selon l'une quelconque des revendications précédentes, dans laquelle le mécanisme de décharge de pression (140) est doté d'une première rainure (141), le mécanisme de décharge de pression (140) est configuré pour être rompu au niveau de la première rainure (141) pour décharger la pression interne de la cellule de batterie (10) quand la pression interne ou la température atteint la valeur seuil, et la partie de blindage (152) couvre complètement la première rainure (141).

9. Cellule de batterie (10) selon l'une quelconque des revendications précédentes, dans laquelle la partie de blindage (152) comprime le film protecteur (160).

10. Cellule de batterie (10) selon l'une quelconque des revendications précédentes, dans laquelle une épaisseur de chaque sous-zone faible (153a) est inférieure ou égale à celle de la partie de corps (151) et/ou de la partie de blindage (152).

11. Cellule de batterie (10) selon l'une quelconque des revendications 1 à 9, dans laquelle :
une deuxième rainure est fournie dans une surface d'un côté de l'élément protecteur (150), à l'écart de la première paroi et/ou proche de la première paroi, et la partie faible (153) est une paroi inférieure de la deuxième rainure.

12. Cellule de batterie (10) selon la revendication 11, dans laquelle la deuxième rainure est une rainure annulaire entourant la partie de blindage (152) ; et
une épaisseur de la partie faible (153) va de préférence de 0,08 mm à 0,3 mm.

13. Cellule de batterie (10) selon l'une quelconque des revendications précédentes, dans laquelle le coffre de batterie comprend :
un boîtier (102) doté d'une cavité de logement et d'une ouverture, la cavité de logement recevant de préférence un ensemble d'électrode (101) ; et
un ensemble de couverture d'extrémité (100) comprenant une plaque de couverture (110) et une borne d'électrode (121, 122), dans laquelle la plaque de couverture (110) est configurée pour couvrir l'ouverture du boîtier (102), la borne d'électrode (121, 122) est agencée sur la plaque de couverture (110), et la première paroi est la plaque de couverture (110).

14. Batterie, comprenant un coffre et au moins une cellule de batterie selon l'une quelconque des revendications 1 à 13, la cellule de batterie étant reçue dans le coffre.

15. Dispositif électrique, comprenant une batterie selon la revendication 14 et configuré pour recevoir de l'énergie électrique fournie par la batterie.
